# EUROPÄISCHE PATENTSCHRIFT

(11) **EP 0 861 745 B1**
(45) Veröffentlichungstag und Bekanntmachung des Hinweises auf die Patenterteilung: **19.12.2001**
(21) Anmeldenummer: 98102269.2
(22) Anmeldetag: 10.02.1998
(51) Int. Cl.: B60H 1/00, G05D 23/13

(54) **Elektromagnetventil, insbesondere fuer Heizungsanlagen in Kraftfahrzeugen**
Electromagnetic valve, especially for a heating installation of a motor vehicle
Vanne électromagnétique, notamment pour installation de chauffage de véhicule automobile

(30) Priorität: 26.02.1997 DE 19707666
(43) Veröffentlichungstag der Anmeldung: 02.09.1998
(73) Patentinhaber: Ford Global Technologies, Inc., Dearborn, Michigan 48126 (US)
(72) Erfinder: Kabierschke, Detlef Rainer, 51469 Bergisch Gladbach (DE); Marx, Joergen, 50767 Koeln (DE); Nienhaus, Thomas Johannes, 50679 Koeln (DE)
(74) Vertreter: Messulam, Alec Moses

(56) Entgegenhaltungen:
- DE-A- 4 226 531
- DE-B- 1 177 444
- US-A- 5 579 741

## Beschreibung

Die Erfindung bezieht sich auf ein Elektromagnetventil, insbesondere für Heizungsanlagen in Kraftfahrzeugen, der im Oberbegriff des Patentanspruches 1 erläuterten Art (siehe DE-US-4 226 531).

Aus der DE-OS 42 26 531 ist ein Elektromagnetventil, insbesondere für Heizungsanlagen in Kraftfahrzeugen bekannt, bei dem ein in einer Elektromagnetspule axial bewegbarer Anker über einen Schaft ein Ventilglied betätigt, das zwei im Abstand zueinander angeordnete Ventilteller aufweist, von denen einer einen Vorlauf und von denen der andere einen Rücklauf steuert wobei, wenn der eine in Schließlage auf einen ersten Ventilsitz aufsetzt, der andere mit einem Abstützende auf einen Anschlagbereich einer Grundplatte mit einer elastischen Auflage anschlägt.

Solche Elektromagnetventile für Heizungsanlagen in Kraftfahrzeugen werden getaktet angesteuert, d. h., die Durchflußmenge der Flüssigkeit durch das Ventil hängt von der Impulsweite der Ansteuerung des Elektromagnetventils ab. Das am einen Ventilteller vorgesehene Abstützende schlägt somit in regelmäßigen, kürzeren oder längeren Abständen auf die Grundplatte mit der elastischen Auflage auf und es hat sich gezeigt, daß je nach Einbaulage des Elektromagnetventils dieses Anschlagen zu Geräuschen führt, die von Fahrzeuginsassen des Kraftfahrzeuges als störend wahrgenommen werden können.

Aus der DE-OS 41 10 254 ist ein Elektromagnetventil für hydraulische Kreisläufe in Kraftfahrzeugen bekannt, bei dem ein solches Anschlaggeräusch durch eine elektronische Ansteuerung der Elektromagnetspule vermieden wird.

Das bekannte Elektromagnetventil erfordert damit eine technisch aufwendigere Ansteuerungseinheit.

Die Aufgabe der Erfindung ist es ein Elektromagnetventil, insbesondere für Heizungsanlagen in Kraftfahrzeugen der im Oberbegriff des Patentanspruches 1 erläuterten Art derart zu verbessern, daß die auftretenden Anschlaggeräusche durch einfache mechanische Maßnahmen soweit gedämpft werden, daß sie nicht mehr störend wahrnehmbar sind.

Gemäß der Erfindung wird diese Aufgabe gelöst, indem bei einem Elektromagnetventil für Heizungsanlagen in Kraftfahrzeugen, der im Oberbegriff des Patentanspruches 1 erläuterten Art, die im Kennzeichenteil des Patentanspruches 1 aufgezeigten Maßnahmen vorgesehen werden.

In den Ansprüchen 2 bis 4 sind noch weitere Ausführungsmöglichkeiten dieser Maßnahme aufgezeigt.

Dadurch, daß im Anschlagbereich für das Abstützende des einen Ventiltellers an der Grundplatte eine oder mehrere Ausnehmungen vorgesehen sind, wird einerseits die Federwirkung der an sich vorhandenen elastischen Auflage verbessert und andererseits durch die in die Ausnehmungen eintretende Flüssigkeit und deren Vordrängung beim Aufschlag eine Dämpfung bereitgestellt, so daß die Anschlaggeräusche nicht mehr störend wahrnehmbar sind.

Diese Ausnehmungen können hierbei unmittelbar durch unterhalb der elastischen Auflage im Anschlagbereich angeordnete Vertiefungen in der Grundplatte gebildet werden.

Diese Ausnehmungen können jedoch auch durch entsprechend ausgeformte Hochwölbungen in der elastischen Auflage bei gleichbleibender ebener Grundplatte gebildet werden.

Die Ausnehmungen können jedoch auch in Form von an der elastischen Auflage ausgebildeten Vertiefungen oder Taschen ausgebildet sein, die mit den Abstützfüßen des Ventiltellers dämpfend zusammenwirken.

Die Erfindung wird anhand von in den Zeichnungen gezeigten Ausführungsbeispiele näher erläutert. Es zeigt:
- Fig. 1: einen vertikalen Schnitt durch ein Elektromagnetventil gemäß dem Oberbegriff des Patentanspruches 1;
- Fig. 2: zeigt eine vergrößerte Darstellung von Einzelheiten im Bereich der Grundplatte in Fig. 1;
- Fig. 3: eine weitere Ausführungsform der Einzelheiten im Bereich der Grundplatte und
- Fig. 4: eine weitere Ausführungsmöglichkeit der Einzelheiten im Bereich der Grundplatte.

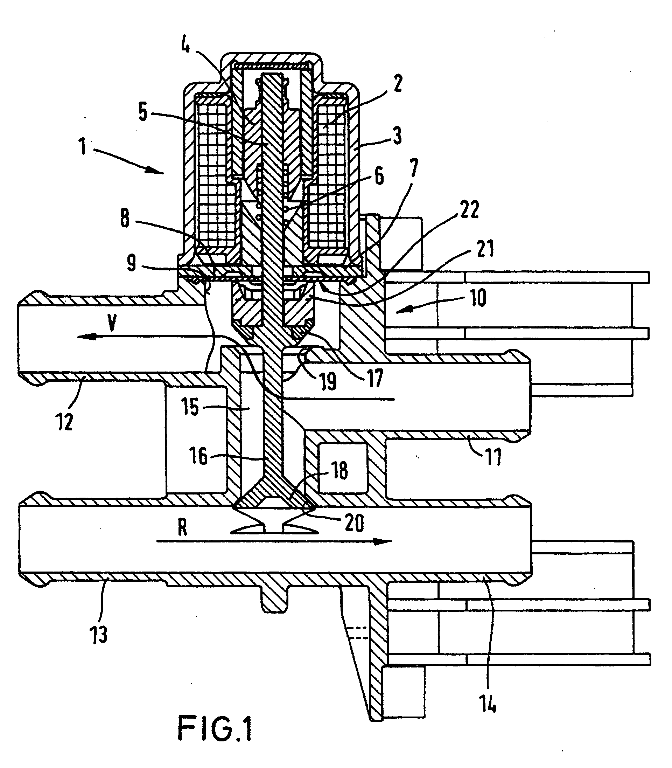

In Fig. 1 ist ein Elektromagnetventil 1 gezeigt, wie es insbesondere zur Steuerung von Heizungsanlagen in Kraftfahrzeugen Verwendung finden kann.

Das Elektromagnetventil 1 besteht im wesentlichen aus einer Elektromagnetspule 2, die in einem Spulengehäuse 3 angeordnet ist und die konzentrisch in ihrem Inneren einen Anker 4 mit einem Schaft 5 aufnimmt, der über eine Feder 6 in Öffnungsrichtung belastet ist.

Das Spulengehäuse 3 wird durch eine Grundplatte 7 abgeschlossen, die mit einer elastischen Auflage 8 versehen ist, mit der sie in nach außen abgedichteter Weise auf eine Einbauöffnung 9 eines Anschlußstutzengehäuses 10 einer Heizungsanlage aufgesetzt und montiert wird.

Das Anschlußstutzengehäuse 10 weist Anschlußstutzen 11 und 12 für einen Heizungsvorlauf und Anschlußstutzen 13 und 14 für einen Heizungsrücklauf auf. Zwischen dem Heizungsvorlauf und dem Heizungsrücklauf erstreckt sich ein Verbindungskanal 15, in dem ein Ventilglied 16 angeordnet ist, daß z.B. in einem Stück mit dem Schaft 5 des Ankers 4 des Elektromagnetventiles 1 ausgebildet ist.

Das Ventilglied 16 weist zwei im Abstand zueinander angeordnete Ventilteller 17 und 18 auf, die mit entsprechenden Ventilsitzen 19 und 20 im Anschlußstutzengehäuse 10 zusammenwirken können.

An dem einen Ventilteller 17 ist ein Abstützende 21 ausgebildet, das bei stromlosem Elektromagnetventil 1, wenn der Ventilteller 17 durch die Feder 6 in Öffnungslage gehalten wird, auf einen Anschlagbereich 22 aufliegt, was trotz der elastischen Auflage 8 Anschlaggeräusche hervorruft, die von Fahrzeuginsassen störend wahrgenommen werden. Dies ist insbesondere der Fall, wenn das Elektromagnetventil zur Steuerung der Heizungsanlage des Kraftfahrzeuges im Bereich des Amaturenbrettes verhältnismäßig nahe den Fahrzeuginsassen angeordnet ist.

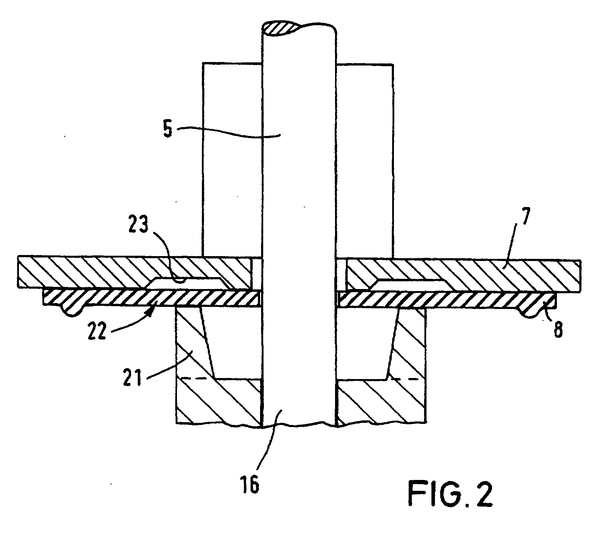

Gemäß der Erfindung wird, wie aus der vergrößerten Darstellung in Fig. 2 ersichtlich wird, im Anschlagbereich 22 des Abstützendes 21 des Ventiltellers 17 unmittelbar unterhalb der elastischen Auflage 8 in der Grundplatte 7 eine ringförmige Ausnehmung 23 angeordnet. Die elastische Auflage 8 bildet so im Anschlagbereich 22 des Abstützendes 21 eine Art Ringmembrane, die Anschlaggeräusche wesentlich besser dämpft, als wenn die elastischen Auflagen 8 unmittelbar an der ebenen Grundplatte 7 anliegen würde.

In besonders günstiger Weise sammelt sich unterhalb der elastischen Auflage 8 in der Ausnehmung 23 Flüssigkeit, die beim Anschlagen des Abstützendes 21 verdrängt wird und so eine zusätzliche hydraulische Dämpfung bereitstellt.

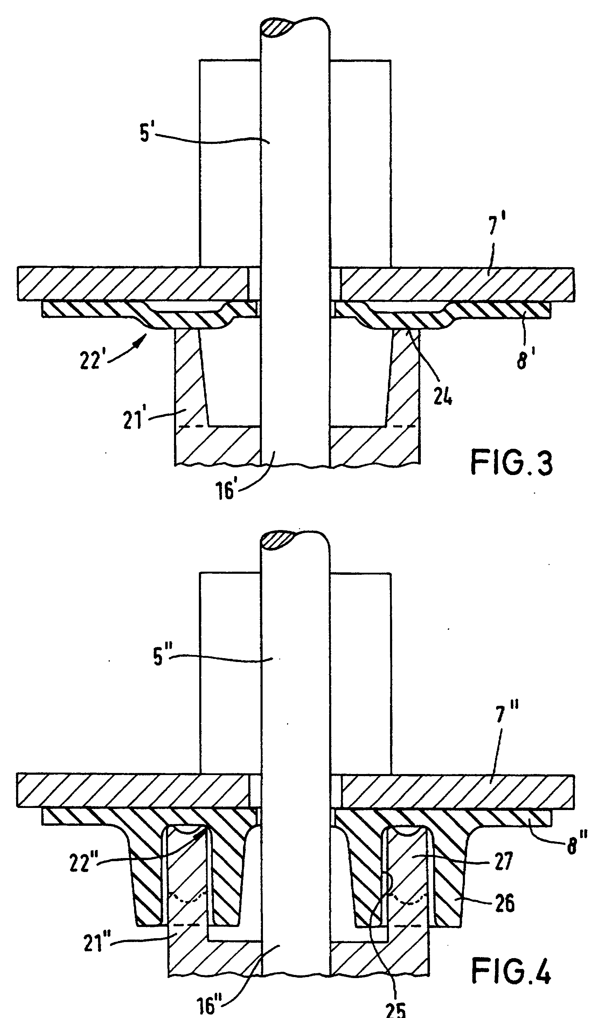

Aus Fig. 3 ist eine alternative Ausführung des Anschlagbereiches zu entnehmen, in der im wesentlichen gleiche Teile mit den gleichen Bezugszeichen, jedoch nur mit einem Strichindex versehen, bezeichnet sind. Bei dieser Ausführungsform ist die Grundplatte 7' eben belassen und die elastische Auflage 8' ist im Anschlagbereich 22' für das Abstützende 21' des Ventilgliedes 16' mit einer ringförmigen Hochwölbung 24 versehen, die gleichfalls für eine weichere, ringförmige, membranartige Abfederung und Dämpfung sorgt.

Aus Fig. 4 ist eine weitere Ausführungsform zu entnehmen, bei der ähnliche Bauteile wieder mit den gleichen Bezugszeichen, nur mit einem Doppelstrichindex versehen, bezeichnet sind. Die Grundplatte 7'' bleibt hierbei eben und die elastische Auflage 8'' ist mit Vertiefungen oder Taschen 25 und 26 versehen. Das Abstützende 21'' des Ventilgliedes 16'' ist mit Füßchen 27 ausgebildet, die in die Vertiefungen und Taschen 25 und 26 eintreten und dort durch Verdrängen von Flüssigkeit zu einem erhöhten Abfedern und Dämpfen des Abstützendes 21'' beitragen.

Durch die erfindungsgemäßen Ausbildungsformen des Anschlagbereiches des Abstützendes des Ventilgliedes kann ohne elektronische Ansteuerungsmaßnahmen das Anschlaggeräusch des Abstützendes des Ventilgliedes soweit herabgesetzt werden, daß es von Fahrzeuginsassen des Kraftfahrzeuges nicht mehr als störend wahrgenommen werden kann.

## Patentansprüche

1. Elektromagnetventil, insbesondere für Heizungsanlagen in Kraftfahrzeugen, mit einem in einer Elektromagnetspule (2) axial bewegbaren Anker (4), der über einen Schaft (5) mit einem Ventilglied (16) verbunden ist, und wobei an dem Ventilglied (16) zwei im Abstand zueinander angeordnete Ventilteller (17, 18) angeordnet sind, die mit entsprechenden Ventilsitzen (19, 20) in einem Anschlußstutzengehäuse (10) der Heizungsanlage zusammenwirken, wobei der eine Ventilteller (17) angesteuert durch die Elektromagnetspule in Schließlage auf den ersten Ventilsitz (19) aufsetzt, **dadurch gekennzeichnet, daß**
- der eine Ventilteller (17) in durch eine Feder (6) bewirkter Öffnungslage mit seinem Abstützende (21) auf einen Anschlagebereich (22) an einer Grundplatte (7) mit einer elastischen Auflage (8) anliegt, und daß
- der Anschlagbereich (22) für das Abstützende (21) des Ventiltellers (17) an der Grundplatte (7) mit einer oder mehreren die Abfederung erhöhenden Ausnehmungen (23, 24, 25, 26) versehen ist.

2. Elektromagnetventil nach Anspruch 1,
**dadurch gekennzeichnet, daß**
- die die Abfederung erhöhende Ausnehmung durch eine ringförmige Vertiefung (23) in der Grundplatte (7) unmittelbar unterhalb der elastischen Auflage (8) im Anschlagbereich (22) ausgebildet ist.

3. Elektromagnetbentil nach Anspruch 1,
**dadurch gekennzeichnet, daß**
- die Ausnehmung durch eine, über einer ebenen Grundplatte (7') in der elastischen Auflage (8') ausgeformte, ringförmige Hochwölbung (24) ausgebildet ist.

4. Elektromagnetventil nach Anspruch 1,
**dadurch gekennzeichnet, daß**
- die Ausnehmung durch Vertiefungen und Taschen (25, 26) an der elastischen Auflage (8") gebildet sind, die mit entsprechenden Füßchen (27) am Abstützende (21'') Flüssigkeit verdrängend zusammenwirken.

## Claims

1. Electromagnetic valve, especially for a heating installation of a motor vehicle, with an anchor (4) which is movable in an electromagnetic spool (2), wherein this anchor (4) is connected via a shaft (5) with a valve member (16), and wherein on the valve member (16) there are two valve discs (17, 18) positioned at a distance from one another, which work together with corresponding valve seats (19, 20) in a connecting piece case (10) of the heating installation, wherein one valve disc (17) controlled through the electromagnetic spool comes down in closed position on the first valve seat (19), **characterised in that** one valve disc (17) lies in opening position effected through a spring (6) with its support end (21) on an impact area (22) on a base plate (7) with an elastic support (8), and that
- the impact area (22) for the support end (21) of the valve disc (17) on the base plate (7) is provided with one or several recesses (23, 24, 25, 26) increasing the cushioning.

2. Electromagnetic valve according to Claim 1
**characterised in that**
- the recess increasing the cushioning is formed through a ring-shaped hollow (23) in the base plate (7) directly below the elastic support (8) in the impact area (22).

3. Electromagnetic valve according to Claim 1
**characterised in that**
- the recess is formed through a ring-shaped high curvature (24) shaped via a level base plate (7') in the elastic support (8').

4. Electromagnetic valve according to Claim 1
**characterised in that**
- the recess is formed through hollows and pockets (25, 26) on the elastic support (8"), which work together with corresponding small feet (27) on the support end (21") displacing liquid.

## Revendications

1. Vanne électromagnétique, notamment pour installations de chauffage de véhicules automobiles, comportant un induit (4) qui est mobile axialement dans un enroulement électromagnétique (2), et est relié à un organe obturateur (16) par l'intermédiaire d'une tige (5), deux disques obturateurs (17, 18), agencés à distance l'un de l'autre et disposés sur l'organe obturateur (16), coopérant avec des sièges d'obturation (19, 20) correspondants dans un carter (10) à manchons de raccordement de l'installation de chauffage, l'un (17) des disques obturateurs reposant sur le premier siège d'obturation (19) en position fermée, en étant activé par l'enroulement électromagnétique,
**caractérisée par le fait que**
- l'un (17) des disques obturateurs est appliqué par son extrémité d'appui (21), en position d'ouverture provoquée par un ressort (6), sur une zone de butée (22) ménagée sur une plaque de base (7) pourvue d'un appui élastique (8) ; et **par le fait que**
- la zone de butée (22) destinée à l'extrémité d'appui (21) du disque obturateur (17) est dotée, sur la plaque de base (7), d'un ou plusieurs évidement(s) (23, 24, 25, 26) accroissant l'amortissement élastique.

2. Vanne électromagnétique selon la revendication 1,
**caractérisée par le fait que**
- l'évidement accroissant l'amortissement élastique est pratiqué dans la zone de butée (22), sous la forme d'un renfoncement annulaire (23) ménagé dans la plaque de base (7), directement au-dessous de l'appui élastique (8).

3. Vanne électromagnétique selon la revendication 1,
**caractérisée par le fait que**
- l'évidement est réalisé sous la forme d'un bombement annulaire (24) ménagé, dans l'appui élastique (8'), sur l'étendue d'une plaque de base (7') plane.

4. Vanne électromagnétique selon la revendication 1,
**caractérisée par le fait que**
- l'évidement est formé par des renfoncements et des alvéoles (25, 26) situés sur l'appui élastique (8'') et coopérant, en refoulant du fluide, avec des mentonnets correspondants (27) sur l'extrémité d'appui (21'').
